Europäisches Patentamt

European Patent Office

Office européen des brevets

(11) Veröffentlichungsnummer: **0 384 327**

**A2**

(12) **EUROPÄISCHE PATENTANMELDUNG**

(21) Anmeldenummer: 90103088.2

(51) Int. Cl.⁵: **E21D 21/00, E21D 20/02**

(22) Anmeldetag: **17.02.90**

(30) Priorität: 20.02.89 DE 3905095

(43) Veröffentlichungstag der Anmeldung:
**29.08.90 Patentblatt 90/35**

(84) Benannte Vertragsstaaten:
**AT BE CH DE DK ES FR GB GR IT LI LU NL SE**

(71) Anmelder: **INTERNATIONAL INTEC PATENT HOLDING ESTABLISHMENT**
**Josef Rheinbergerstrasse 6**
**FL-9490 Vaduz(LI)**

(72) Erfinder: **Harke, Alfons**
**Bleregem Straat Nr. 27**
**B-1790 Affligem-Hekelgem(BE)**

(74) Vertreter: **Peerbooms, Rudolf, Dipl.-Phys.**
**Postfach 200 208 Dickmannstrasse 45c**
**D-5600 Wuppertal 2(DE)**

(54) **In ein vorgebohrtes Loch einzusetzender Injektionsanker.**

(57) Ein in ein vorgebohrtes Loch (3) einzusetzender Injektionsanker besitzt eine das Bohrloch an seiner Mündung abschließenden Sperre (4), die mit einer Einlaßöffnung (6) für die Injektionsmasse versehen ist.

Um die Ausbildung des Injektionsmassepfropfens von außen überwachen zu können, ist die Sperre (4) mit einer Rückflußöffnung (7) für Injektionsmasse versehen, welche in einen vorderen, luftdurchlässigen Auffangkäfig (8) mündet, der nach Aushärten der Injektionsmasse von der Sperre (4) abtrennbar ist.

FIG. 1

EP 0 384 327 A2

Die Erfindung betrifft einen in ein vorgebohrtes Loch einzusetzenden Injektionsanker, mit einer das Bohrloch an seiner Mündung abschließenden Sperre, die mit einer Einlaßöffnung für die Injektionsmasse versehen ist.

Derartige Injektionsanker werden als Gesteinsanker oder Mauerwerksanker insbesondere dann eingesetzt, wenn der Verankerungsgrund keine für eine mechanische Verankerung, z.B. mittels Dübeln, ausreichende Festigkeit aufweist. Bei einem porösen, Hohlräume oder Risse aufweisenden Untergrund ist es aber vielfach schwierig, einen ausreichend festen Injektionsmasse-Pfropfen im vorgebohrten Loch auszubilden. Auch bei der Verwendung von elastisch aufweitbaren, die Injektionsmasse im Bohrloch auffangenden Strümpfen ist es oft schwierig oder überhaupt nicht von außen her zu beurteilen, ob eine ausreichende Injektion erfolgt ist oder nicht.

Der Erfindung liegt die Aufgabe zugrunde, gattungsgemäße Injektionsanker mit einer Kontrolleinrichtung zu versehen, mit der die Ausbildung des Injektionspfropfens im Inneren des Bohrloches von außen her überwacht und dokumentiert werden kann.

Die Lösung dieser Aufgabe wird erfindungsgemäß dadurch erreicht, daß die Sperre mit einer Rückflußöffnung für Injektionsmasse versehen ist, welche in einen vorderen, luftdurchlässigen Auffangkäfig mündet, der nach Aushärten der Injektionsmasse von der Sperre abtrennbar ist.

Ein solcher Auffangkäfig dient bei der Injektion zunächst zur Entlüftung. Nach Ausfüllen des Injektionsraumes fließt die Injektionsmasse auch in diesen vorderen Auffangkäfig hinein, der bei zunehmendem Druck im Injektionsraum sich füllt und an seiner luft- und damit auch wasserdurchlässigen Außenseite feucht wird. Durch Beobachtung des sich füllenden Käfigs und durch Beobachtung der zunehmenden Nassigkeit können Rückschlüsse auf die Ausbildung des Injektionspfropfens innerhalb des Bohrloches gezogen werden, so daß der Einpreßdruck der Injektionsmasse an der Injektionspumpe entsprechend gewählt und die Injektion bei einem bestimmten Füllgrad des vorderen Auffangkäfigs beendet werden kann. Der Auffangkäfig wird nach Aushärten der Injektionsmasse abgetrennt und kann als Dokumentationsmittel aufbewahrt werden.

Der Erfindung zufolge kann ferner vorgesehen werden, daß die Rückflußöffnung mit einer in das Bohrloch ragenden Rückflußleitung versehen ist, mittels welcher die für Kontrollzwecke in den Auffangkäfig zurückzuleitende Injektionsmasse von einer bestimmten Stelle innerhalb des Injektionsraumes gewonnen wird. Hierdurch können ortsspezifische Informationen über die Ausbildung des Injektionspfropfens gewonnen werden. Vorteilhafterweise kann dabei auch vorgesehen werden, daß die Sperre mehrere, jeweils mit einem Auffangkäfig versehene Rückflußöffnungen aufweist, in die jeweils von unterschiedlichen Stellen des Injektionsraumes Injektionsmasse zugeleitet wird, so daß mittels der Auffangkäfige auch Informationen über die an verschiedenen Stellen des Pfropfens vorliegende Pfropfenstruktur erzielt werden können.

Vorzugsweise bestehen die Auffangkäfige aus flexiblen Sichtkontroll-Strümpfen, bei denen der Füllgrad aus der ständig praller werdenden Form des Strumpfes unmittelbar optisch verfolgt werden kann.

In Weiterbildung der Erfindung kann ferner vorgesehen werden, daß bei einem in den beiden Schalen einer zweischaligen Gebäudewand gesondert zu verankernden Injektionsanker an der vorderen Bohrlochsperre zwei Auffangkäfige angeordnet sind, die getrennt voneinander jeweils an die, den Gebäudeschalen zugeordnete Injektionsräume angeschlossen sind. Hierdurch ist es möglich, die Ausbildung der Injektionsmassepfropfen in beiden Gebäudeschalen getrennt zu überwachen.

Weitere Merkmale der Erfindung sind in den Unteransprüchen angegeben und in Verbindung mit der Zeichnung näher erläutert. In der Zeichnung zeigen:

Fig. 1 einen Injektionsanker mit massivem Stahlkern und mit einem Sicht-Kontrollstrumpf nach der Erfindung,

Fig. 2 einen Injektionsanker mit rohrförmigem Stahlanker,

Fig. 3 einen Injektionsanker für ein zweischaliges Mauerwerk,

Fig. 4 eine Stirnansicht auf das frontseitige Ende des Ankers nach Fig. 3,

Fig. 5 und 6 zwei weitere Ausführungsbeispiele,

Fig. 7 eine schematische Darstellung für die Einbringung der Injektionsmasse bei vorgehängter Fassade,

Fig. 8 und 9 ein weiteres Ausführungsbeispiel.

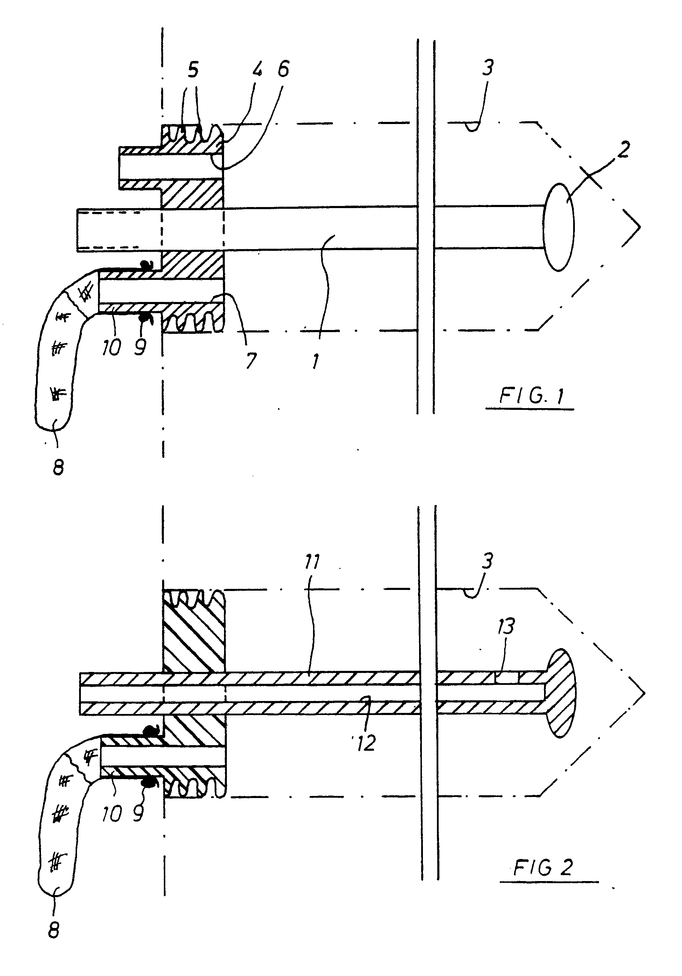

Der in Fig. 1 gezeigte Injektionsanker besteht aus einem zentralen, massiven Stahlanker 1, der mit einem verdickten Ende 2 in ein vorgebohrtes Bohrloch 3 hineingeschoben wird und an seinem anderen, an der Bohrlochmündung anzuordnenden Ende eine das Bohrloch 3 abschließende, scheibenförmige Sperre 4 aus Kunststoff trägt. Die Sperre 4 ist an ihrem Umfang mit Dichtlamellen 5 versehen. Ferner weist die Sperre 4 einen Einlaßkanal 6 zum Eindrücken von Injektionsmasse auf, welche nach Ausfüllen des Bohrloches 3 zunehmend durch einen Rückflußkanal 7 in der Sperre 4 hindurchfließt in einen vorderen, luftdurchlässigen Auffangkäfig 8, der beim Ausführungsbeispiel aus einem flexiblen Sichtkontrollstrumpf besteht, der mittels eines Klemmringes 9 auf einem vorderen Stutzen 10 der Sperre 4 befestigt ist.

Beim Ausführungsbeispiel nach Fig. 2 weist der Injektionsanker einen rohrförmigen Stahlanker 11 auf, durch dessen Innenkanal 12 und radiale Austrittsbohrung 13 die Injektionsmasse in das Bohrloch 3 eingefüllt wird, von wo die Injektionsmasse wiederum zum Auffangkäfig 8 gelangt.

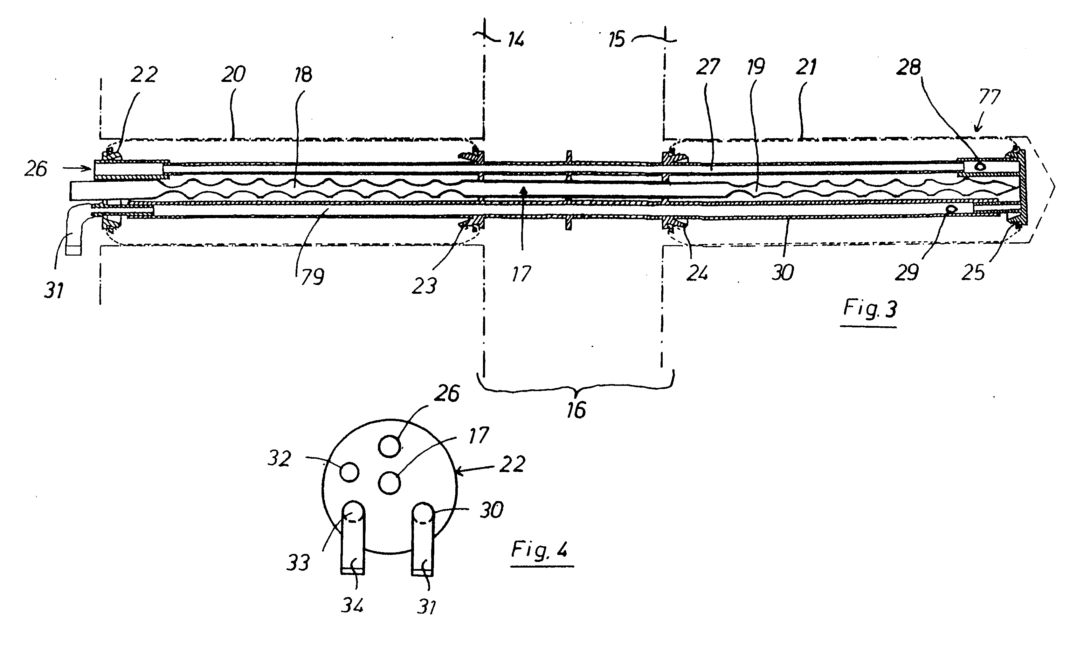

Die Fig. 3 und 4 zeigen einen Injektionsanker für ein aus zwei Schalen 14, 15 bestehendes, durch einen Luftspalt 16 getrenntes Mauerwerk. Der Injektionsanker besteht hier aus einem in seinen Verankerungsabschnitten gewellten Stahldrahtanker 17, der auf seinen beiden Verankerungsabschnitten 18, 19 je einen Strumpf 20, 21 zur Ausbildung gesonderter Injektionsmassepfropfen innerhalb der beiden Gebäudeschalen 14, 15 trägt. Die Strümpfe sind jeweils an ihren Enden auf Sperrscheiben 22, 23, 24, 25 stramm aufgeklemmt. In der vorderen, in Fig. 4 gezeigten Sperrscheibe 22 ist eine erste Injektionsöffnung 26 vorgesehen, an die ein bis in den hinteren Verankerungsabschnitt durchgehendes Rohr 27 angeschlossen ist, durch dessen radialen Auslaß 28 Injektionsmasse nur in den vom hinteren Strumpf 21 umschlossenen Raum einströmt. An diesen hinteren Injektionsraum ist über die Öffnung 29 ein zur vorderen Sperrscheibe 22 führendes Rückflußrohr 30 angeschlossen, das.in einem vor der Sperrscheibe 22 liegenden Sichtkontroll-Strumpf 31 mündet, so daß die Ausbildung des Injektionspfropfens innerhalb der Gehäuseschale 15 vorne beobachtet werden kann. In der vorderen Sperrscheibe 22 ist ferner noch eine zweite Einfüllöffnung 32 zum Eindrücken von Injektionsmasse in den vorderen, vom Strumpf 20 umschlossenen Injektionsraum vorgesehen, aus dem Injektionsmasse über die weitere Rückflußöffnung 33 in der Sperrscheibe 22 zu einem gesonderten Sichtkontroll-Auffangstrumpf 34 zurückfließt. Die beiden Massepfropfen können somit nacheinander in den beiden Mauerwerksschalen ausgebildet und jeweils für sich bei ihrer Ausbildung kontrolliert werden.

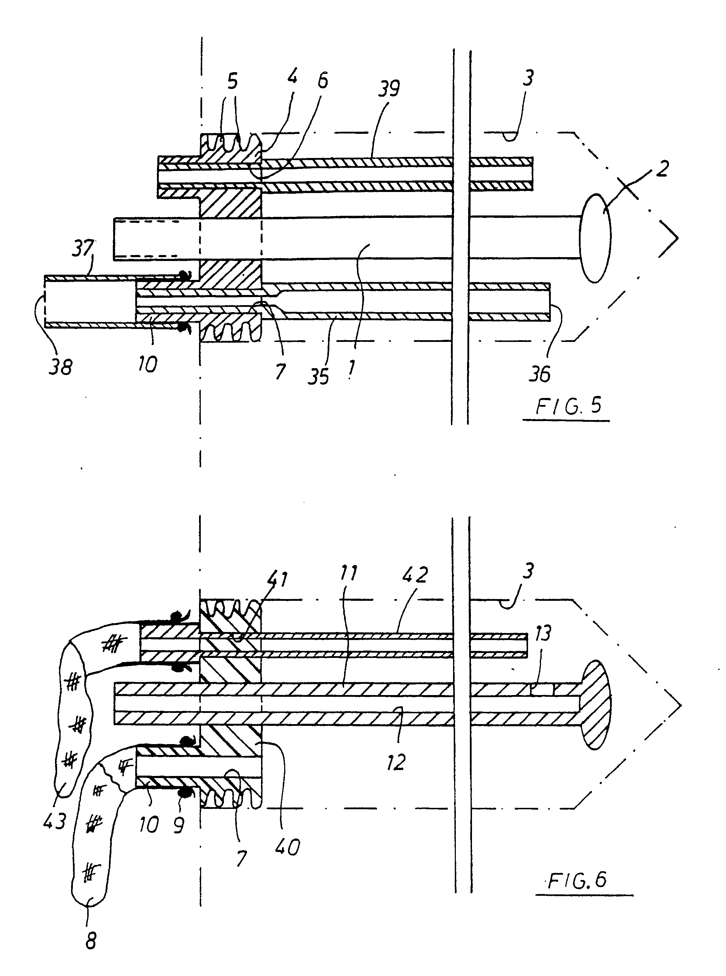

Fig. 5 zeigt eine gegenüber Fig. 1 abgewandelte Ausführungsform. In die Rückflußöffnung 7 ist hier eine Rückflußleitung 35 eingesteckt, deren Mündung 36 im Bohrlochtiefsten liegt. Auf den vorderen Einfüllstutzen 10 der Sperrscheibe 4 ist hier ein Auffangkäfig 37 stramm aufgesteckt, der aus einer zylindrischen Hülse besteht, deren äußere Stirnfläche von einem feinmaschigen, luftdurchlässigen Sieb 38 verschlossen ist. Die im Auffangkäfig 37 gewonnene Probe gibt Auskunft über die Struktur des Pfropfens im Bereich der Mündung 36, also im Bereich des Bohrlochtiefsten. In die Einfüllöffnung 6 ist eine rohrförmige Einfüllleitung 39 eingesteckt, die ebenfalls bis zum Bohrlochtiefsten ragt und sicherstellt, daß das Bohrloch vom Bohrlochtiefsten aus nach vorne hin sich mit Injektionsmasse füllt.

In Fig. 6 ist ein gegenüber Fig. 2 abgewandeltes Ausführungsbeispiel dargestellt. Hier ist in der vorderen Sperrscheibe 40 zusätzlich zu der Rückflußöffnung 7 noch eine weitere Rückflußöffnung 41 vorgesehen, in die eine bis zum Bohrlochtiefsten ragende Rückflußleitung 42 eingesteckt ist und die ebenfalls mit einem Sichtkontrollstrumpf 43 versehen ist. Am Sichtkontrollstrumpf 8 kann somit die Ausbildung des Pfropfens in der Nähe der Bohrlochmündung und mittels des Sichtkontrollstrumpfes 43 die Pfropfenausbildung im Bereich des Bohrlochtiefsten überwacht werden.

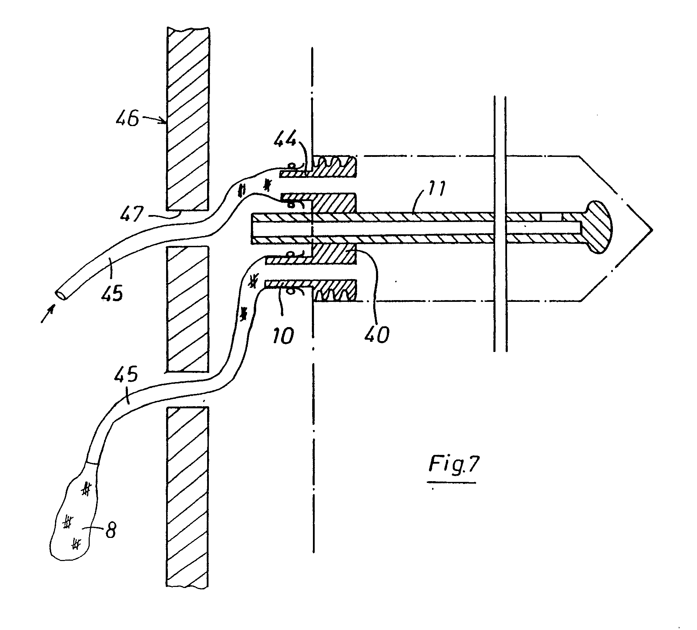

In Fig. 7 ist veranschaulicht, daß auf den Einfüllstutzen 44 und auf den Rückflußstutzen 10 der Sperrscheibe 40 im Bedarfsfall auch Verlängerungsschläuche 45, 45 angeschlossen werden können, was beispielsweise erforderlich werden kann, wenn nach dem Einsetzen der Injektionsanker zunächst eine Vorhangfassade 46 oder dgl. montiert wird, ehe die Injektion erfolgt. Die Schläuche 45, 45 werden hierbei durch Fugen 47 der Vorhangfassade 46 hindurchgezogen.

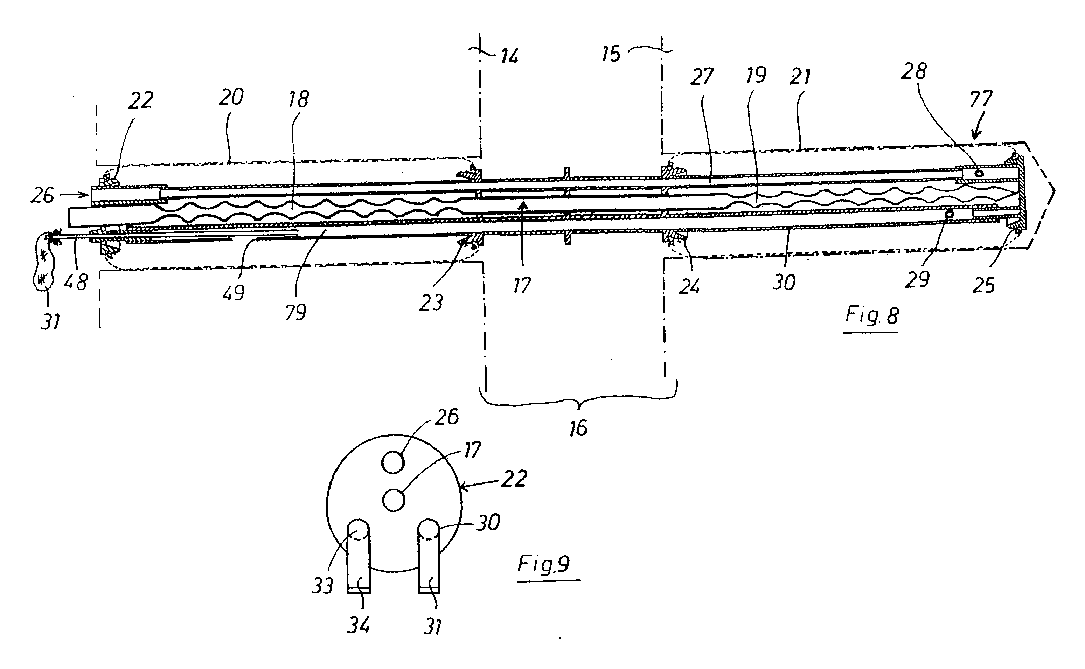

Die Fig. 8 und 9 zeigen ferner noch eine gegenüber dem Ausführungsbeispiel nach den Fig. 3 und 4 abgewandelte Ausführungsform. In die bis zum hinteren Injektionsraum innerhalb der Gebäudeschale 15 ragende Rückflußleitung 30 ist ein einen Sichtkontrollstrumpf 31 tragendes Röhrchen 48 eingeschoben, welches eine radiale Öffnung 49 der Rückflußleitung 30 versperrt, welche im Bereich des vorderen Injektionsraumes angeordnet ist. Bei der Ausbildung des hinteren Injektionspfropfens wird in der beschriebenen Weise über die erste Einfüllöffnung 26 Injektionsmasse eingedrückt. Über die Rückflußleitung 30 und das Röhrchen 48 fließt Masse zum Sichtkontrollstrumpf 31. Nach Abschluß dieses Injektionsvorganges wird das Röhrchen 48 aus der Rückflußleitung 30 herausgezogen, so daß die Öffnung 49 nunmehr frei ist. Der vordere Teil der Rückflußleitung 30 wird nunmehr als zweite Einführleitung zum Füllen des vorderen Injektionsraumes ausgenützt, wobei dieser Injektionsvorgang wiederum über den zweiten Sichtkontrollstrumpf 34 beobachtet wird. Bei dieser Ausführungsform sind in der vorderen Sperre 22 außer der mittigen Öffnung für den Drahtanker 17 nur noch drei Öffnungen, und zwar die Öffnungen 26, 33 und die Öffnung für das Rohr 30, erforderlich, die in äquidistanten Winkelabständen angeordnet sind. Die Ausführungsform nach den Fig. 8 und 9 empfiehlt sich insbesondere dann, wenn das Bohrloch einen verhältnismäßig geringen Durchmesser hat und beispielsweise der Durchmesser der Scheibe 22 nur 16 Millimeter beträgt.

**Ansprüche**

1. In ein vorgebohrtes Loch einzusetzender Injektionsanker, mit einer das Bohrloch an seiner Mündung abschließenden Sperre, die mit einer Einlaßöffnung für die Injektionsmasse versehen ist, dadurch gekennzeichnet, daß die Sperre (4) mit einer Rückflußöffnung (7) für Injektionsmasse versehen ist, welche in einen vorderen, luftdurchlässigen Auffangkäfig (8) mündet, der nach Aushärten der Injektionsmasse von der Sperre (4) abtrennbar ist.

2. Injektionsanker nach Anspruch 1, dadurch gekennzeichnet, daß die Rückflußöffnung (7) mit einer in das Bohrloch ragenden Rückflußleitung (35) versehen ist, mittels welcher die für Kontrollzwecke in den Auffangkäfig (8) zurückzuleitende Injektionsmasse von einer bestimmten Stelle innerhalb des Injektionsraumes gewonnen wird.

3. Injektionsanker nach den Ansprüchen 1 und 2, dadurch gekennzeichnet, daß die Sperre (40) mehrere, jeweils mit einem Auffangkäfig (8, 43) versehene Rückflußöffnungen (7, 41) aufweist, in die jeweils von unterschiedlichen Stellen des Injektionsraumes Injektionsmasse zugeleitet wird.

4. Injektionsanker nach den Ansprüchen 1, 2 oder 3, dadurch gekennzeichnet, daß die Einlaßöffnung (6) mit einer in das Bohrloch ragenden Einfülleitung (39) verbunden ist.

5. Injektionsanker nach einem oder mehreren der Ansprüche 1 bis 4, dadurch gekennzeichnet, daß der Auffangkäfig (8) aus einem Sichtkontrollstrumpf besteht.

6. Injektionsanker nach einem oder mehreren der Ansprüche 1 bis 5, dadurch gekennzeichnet, daß der Auffangkäfig (37) aus einer Hülse besteht die eine Siebfläche (38) aufweist.

7. Injektionsanker nach einem oder mehreren der Ansprüche 1 bis 6, dadurch gekennzeichnet, daß bei einem in den beiden Schalen (14, 15) einer zweischaligen Gebäudewand gesondert zu verankernden Injektionsanker an der vorderen Bohrlochsperre (22) zwei Auffangkäfige(31, 34) angeordnet sind, die getrennt voneinander jeweils an die den Gebäudeschalen (14, 15) zugeordneten Injektionsräume angeschlossen sind.

8. Injektionsanker nach Anspruch 7, dadurch gekennzeichnet, daß der Injektionsanker mit zwei Einfülleitungen, von denen die erste (26) in den Injektionsraum der hinteren Gebäudeschale (15) und die zweite (32) in den Injektionsraum der vorderen Gebäudeschale (14) mündet, und mit einer in den Injektionsraum der hinteren Gebäudeschale (15) mündenden Rückflußleitung (30) versehen ist.

9. Injektionsanker nach Anspruch 8, dadurch gekennzeichnet, daß die Rückflußleitung (30) mit einer im Bereich des Injektionsraumes der vorderen Gebäudeschale (14) mündenden Öffnung (49) versehen ist, welche durch ein in die Rückflußleitung (30) einschiebbares, einen Auffangkäfig (31) tragendes Röhrchen (48) verschließbar ist, so daß beim Injizieren in den hinteren Injektionsraum Kontroll-Injektionsmasse in diesen Auffangbehälter (31) zurückfließt, daß das Röhrchen (48) nach Füllen des hinteren Injektionsraumes aus der Rückflußleitung (30) herausziehbar ist, so daß der frei gewordene vordere Teil der Rückflußleitung (30) die zweite Einfülleitung bildet und zum Einleiten von Injektionsmasse in den vorderen Injektionsraum benutzbar ist.

10. Injektionsanker nach Anspruch 8 oder 9, dadurch gekennzeichnet, daß der Injektionsanker rohrförmig ist und selbst die erste Einfülleitung bildet.

11. Injektionsanker nach Anspruch 1, dadurch gekennzeichnet, daß die Sperre (40) aus einer dicht an der Bohrlochmündung befestigbaren Scheibe besteht, die an der Außenseite mit einem Einfüll- und einem Rückflußstutzen (10,44 ) versehen sind, an welchen Verlängerungsschläuche (45, 45) angeschlossen sind.

FIG. 1

FIG 2

Fig. 3

Fig. 4

EP 0 384 327 A2

EP 0 384 327 A2

FIG. 5

FIG. 6

Fig.7

EP 0 384 327 A2

Fig. 8

Fig. 9